Europäisches Patentamt

European Patent Office

Office européen des brevets

(11) Veröffentlichungsnummer: **0 329 963**

**A1**

(12) **EUROPÄISCHE PATENTANMELDUNG**

(21) Anmeldenummer: **89101229.6**

(22) Anmeldetag: **25.01.89**

(51) Int. Cl.⁴: **F16L 33/26 , F16L 37/12 , H02G 3/06**

(30) Priorität: **24.02.88 DE 3805608**

(43) Veröffentlichungstag der Anmeldung:
**30.08.89 Patentblatt 89/35**

(84) Benannte Vertragsstaaten:
**AT BE CH DE ES FR GB IT LI NL SE**

(71) Anmelder: **Friedrich Lütze GmbH & Co.**
**Bruckwiesenstrasse 17-19**
**D-7056 Weinstadt(DE)**

(72) Erfinder: **Hoffmann, Gerhard**
**Gregor Mendel Strasse 26/28**
**D-7140 Ludwigsburg(DE)**

(74) Vertreter: **Jackisch, Walter, Dipl.-Ing. et al**
**Patentanwalt W. Jackisch & Partner**
**Menzelstrasse 40**
**D-7000 Stuttgart 1(DE)**

(54) **Schlauchanschluss.**

㊾ Die Erfindung betrifft einen Schlauchanschluß (1) mit einem an einem Körper befestigbaren Anschlußstück (2) mit einer Aufnahmehülse (7) für einen in diese einsteckbaren Wellschlauch. Dieser ist über mindestens eine in eine Umfangsrille lösbar eingreifende Rippe (19) festlegbar. Die Rippe (19) ist an mindestens einer an der Aufnahmehülse (7) vorgesehenen, in radialer Richtung federnd ausgebildeten Zunge (13, 14) angeordnet und wird von einem Sicherungsring (27) übergriffen, der für die Montage und Demontage des Wellschlauches zum radialen Verschwenken der Zunge (13, 14) wahlweise in eine Freigabestellung oder eine Befestigungsstellung verdrehbar ist. An der Innenseite des Sicherungstinges (27) ist ein Druckteil (32) angeordnet, der beim Drehen des Sicherungsringes (27) in Umfangsrichtung auf die Zunge (13, 14) aufläuft und diese dadurch verstellt. Mit relativ geringem Kraftaufwand ist so der Wellschlauch festgelegt und gegen unbeabsichtigtes axiales Abziehen gesichert.

FIG.6

## Schlauchanschluß

Die Erfindung betrifft einen Schlauchanschluß mit den Merkmalen des Oberbegriffs des Anspruchs 1.

Bekannte Schlauchanschlüsse dieser Art können ein rohrförmiges Anschlußstück aufweisen, an dessen einem Ende ein Gewinde ausgebildet sein kann, über das das Anschlußstück an einem Körper, wie Schaltschrank oder Anschlußkasten eines Elektromotors, befestigt werden kann. An der dem Gewinde gegenüberliegenden Seite des Anschlußstücks ist eine Aufnahmehülse ausgebildet, in die der Endbereich eines Wellschlauches eingesteckt werden kann, der als Schutzschlauch für ein elektrisches Kabel dienen kann. Der Wellschlauch kann in der Aufnahmehülse über einen Sicherungsring festgelegt werden, indem der Sicherungsring gegen eine federnde Zunge drückt, die an einem Ende eine Rippe besitzt, die in eine Umfangsrille des Wellschlauches eingreift. Ein derartiger Schlauchanschluß ist insoweit nachteilig, da bei der Montage zur Fertigstellung des Wellschlauches der Sicherungsring in Längsrichtung, also parallel zur Längsachse des Schlauchanschlußstückes auf die Zunge aufgeschoben werden muß. Eine derartige Wellschlauchbefestigung erfordert einen verhältnismäßig großen Kraftaufwand, da beim Aufdrücken des Sicherungsringes durch die axiale Längsverschiebung eine einseitige beziehungsweise ungleichmäßige Kraftübertragung erfolgt. Ein weiterer Nachteil besteht darin, daß bei einem unbeabsichtigten axialen Abziehen des Sicherungsringes der Wellschlauch gleichzeitig aus der Aufnahmehülse in derselben Richtung mit herausgezogen wird.

Die Aufgabe der Erfindung besteht darin, die vorbeschriebenen Nachteile zu vermeiden und einen Schlauchanschluß mit den Merkmalen des Oberbegriffs des Anspruchs 1 dahingehend weiterzubilden, daß mit einfachen Mitteln eine leichtere Handhabung bei der Montage und eine höhere Sicherheit gegen unbeabsichtigtes Lösen erzielt wird.

Diese Aufgabe wird erfindungsgemäß durch die kennzeichnenden Merkmale des Anspruchs 1 gelöst.

Zweckmäßige Ausgestaltungen und Weiterbildungen sowie weitere Vorteile und wesentliche Einzelheiten der Erfindung sind den Merkmalen der Unteransprüche, der nachfolgenden Beschreibung und der Zeichnung zu entnehmen, die in schematischer Darstellung bevorzugte Ausführungsformen als Beispiel zeigt. Es stellen dar:

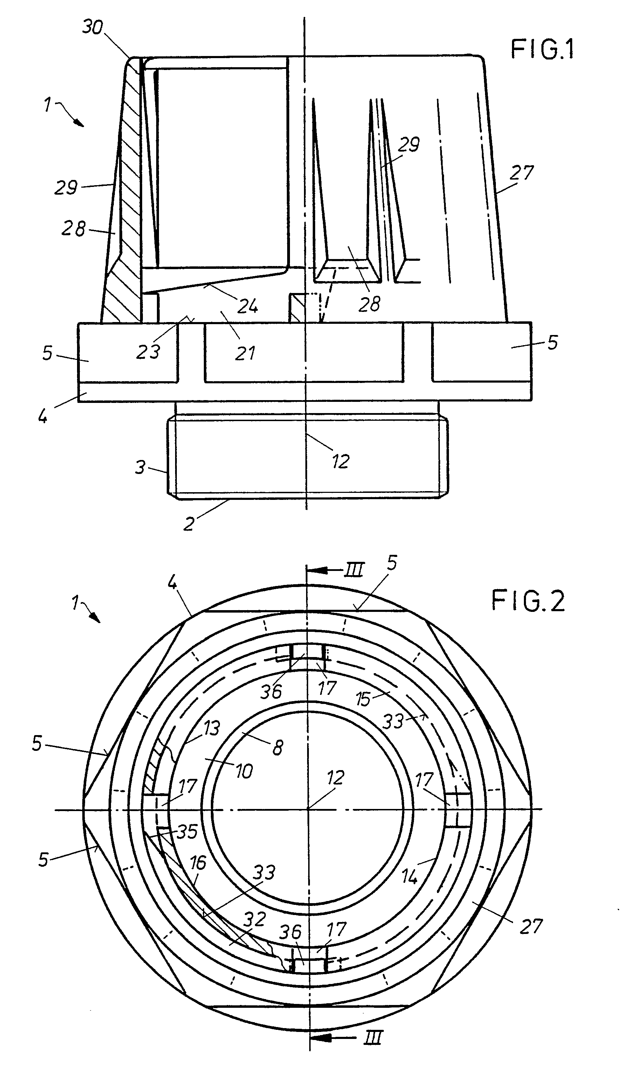

FIG. 1 den erfindungsgemäßen Schlauchanschluß in einer Freigabestellung in Seitenansicht,

FIG. 2 den Schlauchanschluß gemäß FIG. 1 in Draufsicht,

FIG. 3 den Schlauchanschluß nach FIG. 2 gemäß dem Schnitt III - III,

FIG. 4 den Schlauchanschluß gemäß FIG. 1 in Seitenansicht, jedoch in Befestigungsstellung,

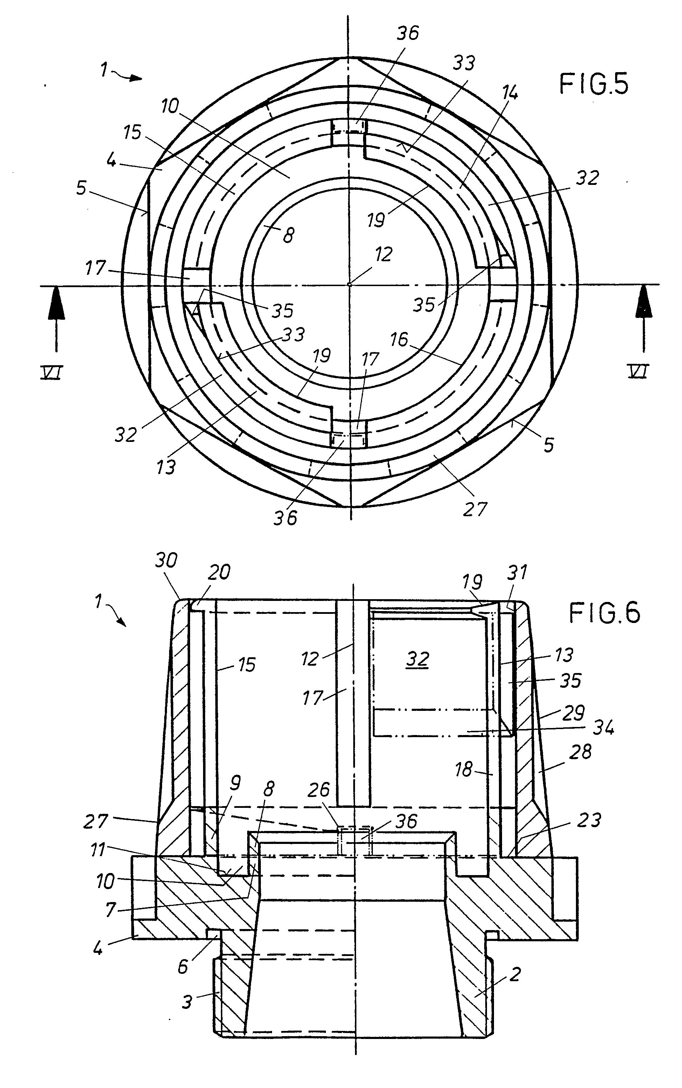

FIG. 5 den Schlauchanschluß der FIG. 4 in Draufsicht,

FIG. 6 den Schlauchanschluß in Seitenansicht gemäß dem Schnitt VI - VI der FIG. 5,

FIG. 7 das Anschlußstück des Schlauchanschlusses der FIG. 1 - 6 in Seitenansicht,

FIG. 8 das Anschlußstück gemäß FIG. 7 in Draufsicht,

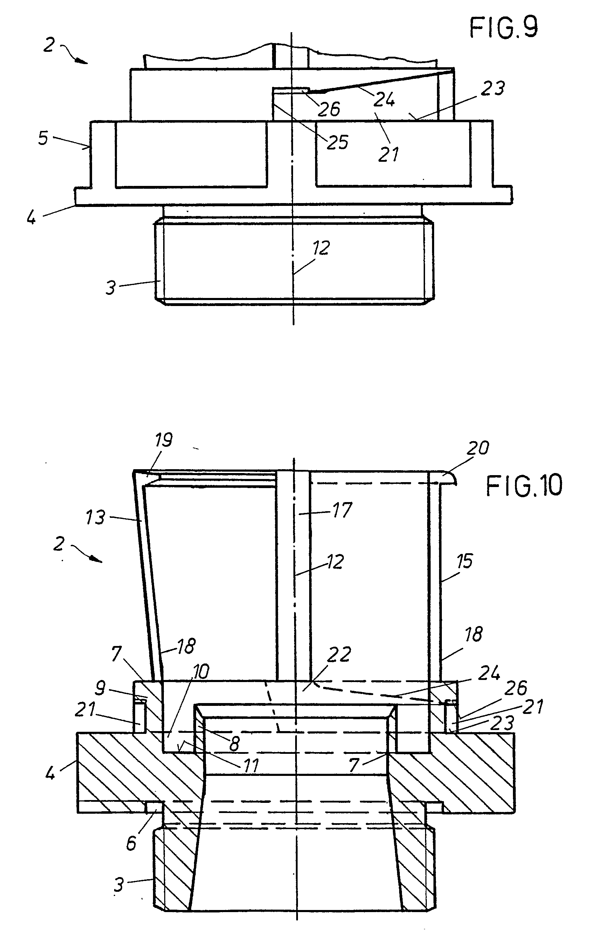

FIG. 9 einen Teil des Anschlußstückes der FIG. 7, jedoch in einer axial um 90° verdrehten Darstellung, in Seitenansicht,

FIG. 10 das Anschlußstück in Seitenansicht gemäß dem Schnitt X - X der FIG. 8,

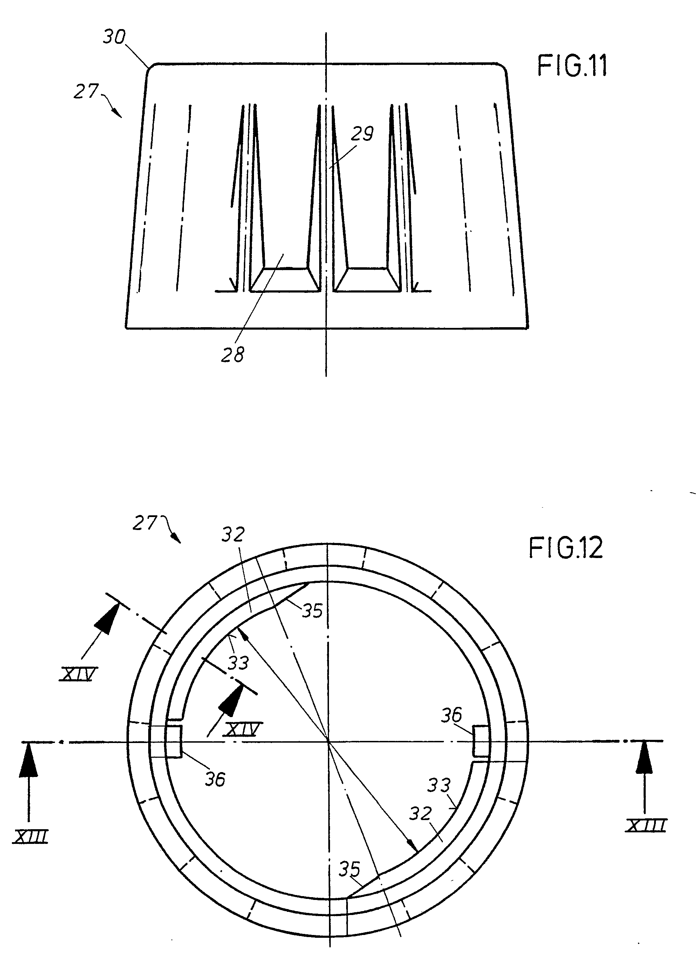

FIG. 11 den Sicherungsring des Schlauchanschlusses der FIG. 1 - 6 in Seitenansicht,

FIG. 12 den Sicherungsring der FIG. 11 in Draufsicht,

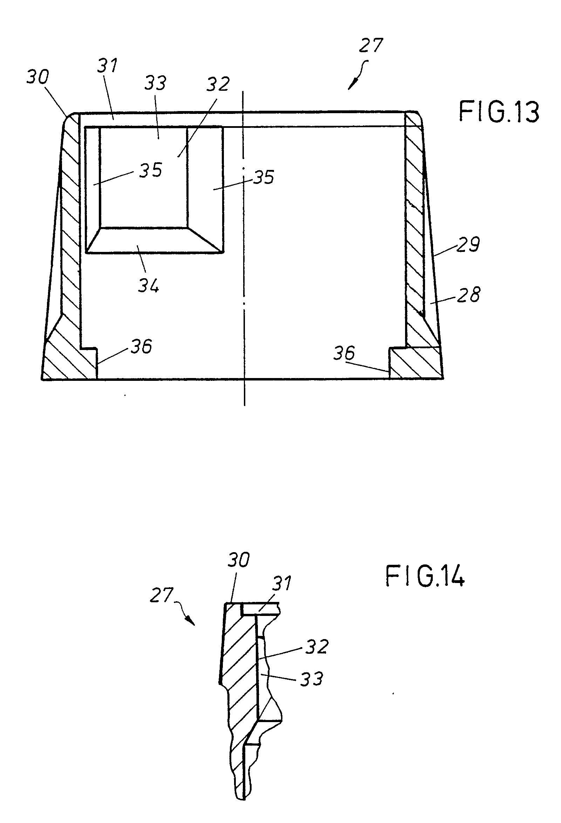

FIG. 13 den Sicherungsring in Seitenansicht gemäß dem Schnitt XIII - XIII der FIG. 12 und

FIG. 14 einen Teil des Sicherungsringes gemäß dem Schnitt XIV-XIV der FIG. 12.

Der erfindungsgemäße Schlauchanschluß 1 besitzt ein Anschlußstück 2, das einen Gewindestutzen 3 aufweist, der an einen Schaltschrank, Maschinenkörper, Anschlußkasten eines Elektromotors oder dergleichen befestigt werden kann.

Das Anschlußstück besitzt einen Bund 4, der am Umfang vorzugsweise sechs Schlüsselflächen 5 zum Ansetzen eines Maulschlüssels oder dergleichen aufweisen kann. An der dem Gewindestutzen 3 zugewandten Seite des Bundes 4 ist eine Ringnut 6 ausgebildet, die für die Aufnahme eines Dichtrings, der bevorzugt als elastischer O-Ring ausgeführt sein kann, vorgesehen ist. Beim Befestigen des Gewindestutzens 3 wird der O-Ring gegen eine Anlagefläche des Anschlußkastens oder dergleichen gedrückt, wodurch eine das Eindringen von Staub und Feuchtigkeit verhindernde Abdichtung erzielt wird.

An der dem Gewindestutzen 3 gegenüberliegenden Seite des Bundes 4 weist das Anschlußstück 2 eine Aufnahmehülse 7 auf, die aus einer rohrförmigen Innenwand 8 und einer ebenfalls rohrförmigen Außenwand 9 besteht. Zwischen der Innenwand 8 und der im Durchmesser größeren Außenwand 9 ist eine kreisringförmige Nut 10 ausgebildet, die an der dem Gewindestutzen 3 abgewandten Seite offen ist und deren Nutgrund 11 sich im Bereich des Bundes 4 befindet.

In die Seitennut 11 kann eine (nicht dargestellte) Dichtung eingesetzt werden, die am Nutgrund 11 anliegt und bevorzugt aus einem geschlossenzelligen Schaumgummi oder einem ähnlichen hochelastigen Kunststoff hergestellt sein kann. Die Dichtung kann einen rechteckförmigen Querschnitt aufweisen und parallel zur Achse 12 des Schlauchanschlusses 1 eine verhältnismäßig große Länge besitzen. Die Länge der Dichtung kann etwa doppelt so groß sein wie die Dichtungsbreite, so daß in axialer Richtung ein großer Verformungsweg für die Dichtung zur Erzielung eines großen Toleranzausgleichs und einwandfrei dichten Anschlusses eines hier nicht dargestellten Wellschlauches oder dergleichen erzielt werden kann, der bevorzugt parallele Umfangsrillen aufweisen kann. Das Ende des Wellschlauches wird in die Seitennut 10 der Aufnahmehülse 7 eingeführt und drückt mit seiner Stirnfläche gegen die in der Seitennut 10 vorgesehene Dichtung.

Der Wellschlauch kann bevorzugt als Schutzschlauch für ein an einem Schaltkasten oder dergleichen anzuschließendes Elektrokabel vorgesehen sein und kann auf der Baustelle vom Monteur durch einfaches Abschneiden auf das jeweils notwendige Maß abgel ngt werden. Der Wellschlauch kann zweckmäßig aus elektrisch isolierendem Kunststoff hergestellt und so bemessen sein, daß er in der Seitennut 10 exakt geführt ist.

Das Anschlußstück 2 weist in Verlängerung der Aufnahmehülse 7 zwei Zungen 13, 14 und zwei zungenähnliche Tragteile 15, 16 auf. Die Zungen 13,14 und Tragteile 15,16 sind etwa viertelkreisförmig ausgebildet und im wesentlichen kreisringbildend angeordnet, und zwar vorzugsweise so, daß sich die beiden Zungen 13, 14 und die beiden Tragteile 15, 16 diametral gegenüberliegen. Das heißt, daß je eine Zunge 13, 14 und je ein Tragteil 15, 16 abwechselnd neben-einander liegen. Die Zungen 13, 14 und Tragteile 15, 16 sind durch je einen Längsschlitz 17 getrennt, der sich vom freien Ende der Zungen 13, 14 und Tragteile 15, 16 bis zum Fußbereich 18 erstreckt, der an die Außenwand 9 der Aufnahmehülse 7 angrenzt.

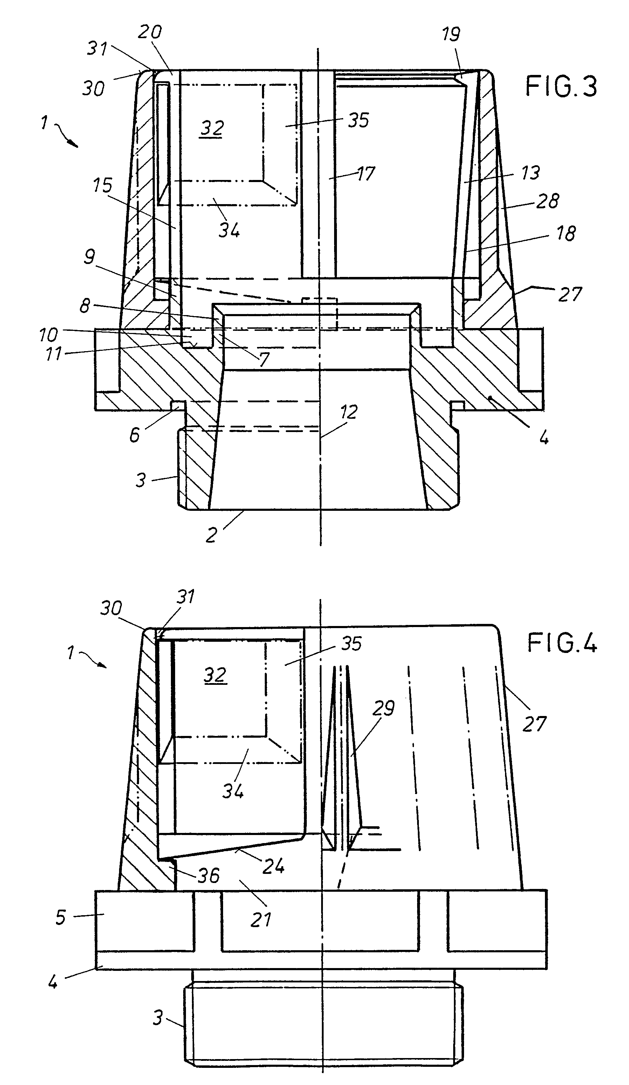

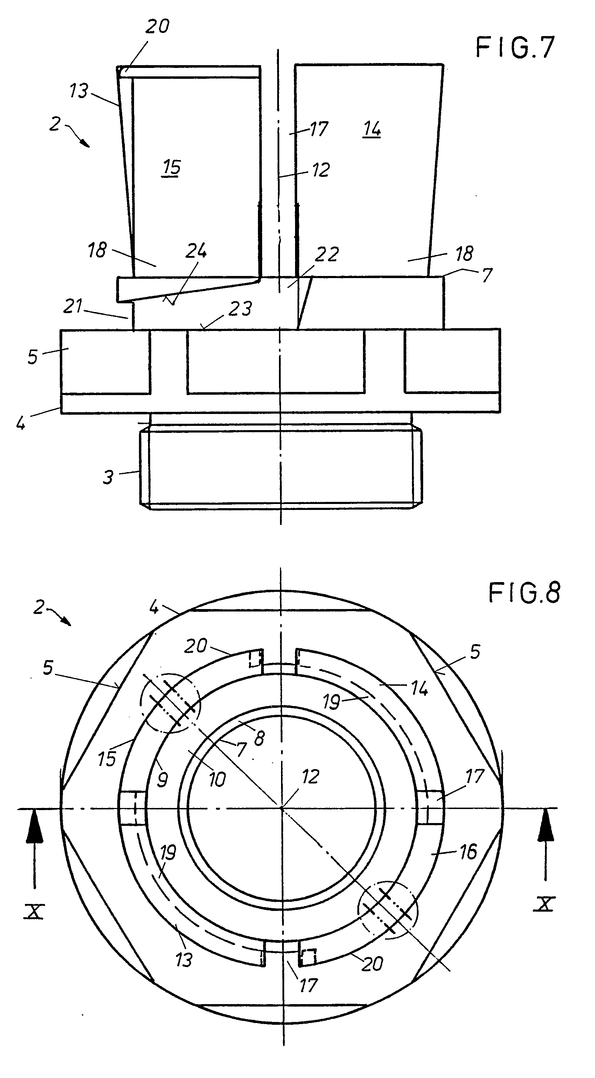

Insbesondere den FIG. 3 und 7 ist zu entnehmen, daß die Zungen 13, 14 in der dargestellten Freigabestellung zu ihrem freien Ende hin schräg nach ußen verlaufen, wobei der Winkel für den Schrägverlauf vorzugsweise ungefähr 5° betragen kann. Am freien Ende der Zungen 13, 14 kann je eine Rippe 19 angeordnet sein, die sich radial nach innen in Richtung zur Achse 12 hin erstreckt. Die Zungen 13, 14 sind federnd ausgebildet und angeformt, so daß sie in einem gewissen Maße radial verschwenkt werden können.

Die Tragteile 15, 16 verlaufen im wesentlichen parallel zur Achse 12 und besitzen an ihrem freien Ende je einen Wulst 20, der sich in Form eines Kragens radial nach außen erstreckt. Die Zungen 13, 14 und Tragteile 15, 16 können zweckmäßig so ausgebildet sein, daß der Durchmesser zwischen den Innenkanten der einander gegenüberliegenden Rippen 19 etwa gleich dem Durchmesser der Innenseiten der einander gegenüberliegenden Tragteile 15, 16 ist, während die Außenkanten der an den Tragteilen 15, 16 ausgebildeten Wulste 20 und die Außenkanten an den freien Enden der Zungen 13, 14 ebenfalls im Durchmesser ungefähr gleich beabstandet sind.

Am Umfang der Aufnahmehülse 7 können zwei viertelkreisförmige Nuten 21 ausgebildet sein, die einander zweckmäßig diametral gegenüber-liegen. Die Nut 21 weist eine Einführöffnung 22 auf, die in Verlängerung beziehungsweise in Angrenzung an den Trennschlitz 17 vorgesehen ist. Die Nut 21 kann an der einen Seite von einer Stirnfläche 23 des Bundes 4 begrenzt sein. Die der Stirnfläche 23 gegenüberliegende Begrenzungswand der Nut 21 kann eine Führungsschräge 24 aufweisen, die so verläuft, daß sich die Nut 21, ausgehend von der Einführöffnung 22, in Richtung zu einem Endanschlag 25 hin verengt. Außerdem kann eine Aussparung 26 vorgesehen sein, die bevorzugt am Ende der Nut 21, also dicht vor dem Endanschlag 25, ausgebildet sein kann.

Darüber hinaus weist der erfindungsgemäße Schlauchanschluß 1 einen Sicherungsring 27 auf, der im wesentlichen rohrförmig ausgebildet ist und am Umfang ausgeformte Mulden 28 und Stege 29 besitzt, um bei der Montage und Demontage des Schlauchanschlusses eine gute Griffigkeit erzielen zu können. Der Sicherungsring 27 ist auf der Aufnahmehülse 7 sowie den Zungen 13, 14 und Tragteilen 15, 16 ausschließlich drehbar gelagert . Das heißt, daß außer bei der werkseitigen Komplettierung des Schlauchanschlusses 1 keine axial Verschiebung des Sicherungsringes 27 erfolgt. Bei der Montage und Demontage des Wellschlauches wird der Sicherungsring 27 allein um die Achse 12 gedreht, und zwar vorzugsweise um etwa 90°. Der Sicherungsring 27 besitzt dazu an seinem dem Bund 4 des Anschlußstücks 2 abgewandten Ende 30 innen eine ringförmige Ausnehmung 31, in die der nach außen gerichtete Wulst 20 der Tragteile 15, 16 eingreift. Die dem Ende 30 gegenüberliegende Stirnseite des Sicherungringes 27 liegt an der Stirnfläche 23 des Bundes 4 an. Der Sicherungsring 27 ist dadurch zwischen dem Wulst 20 und der Stirnfläche 23 axial unverschiebbar gelagert, wobei das Ende 30 des Sicherungrings 27 und die freien Enden der Zungen 13, 14 und der Tragteile 15, 16 im wesentlichen in derselben Ebene liegen.

Die Ausnehmungen 31 können von zwei einander diametral gegenüberliegenden Druckteilen 32 begrenzt sein, die an der Innenseite des Sicherungringes 27 angeformt sind. Der Druckteil 32, dessen Höhe beziehungsweise Dicke etwa dem Überstand beziehungsweise der freien Länge der Rippe 19 entspricht, kann eine bevorzugt rechteckförmige Druckfläche 33 besitzen, die so bemessen ist, daß ihre Breite in Drehrichtung des Sicherungrings 27 ungefähr gleich oder etwas kleiner als die Breite der Zunge 13, 14 ist. Der Druckteil 3 kann an dem dem Bund 4 zugewandten Rand eine Aufschubschräge 34 für den Wulst 20 besitzen und in Drehrichtung des Sicherungsrings 27 mindestens eine, vorzugsweise zwei an gegenüberliegenden Rändern ausgebildete Auflaufschrägen 35 für die Zungen 13, 14 aufweisen.

An der dem Bund 4 zugewandten Stirnseite des Sicherungrings 27 können zwei nach innen ragende Sicherungsnocken 36 angeformt sein, die einander diametral gegenüberliegen. Der Sicherungsnocken 36 ist etwas schmaler als der Trennschlitz 17, die Einführöffnung 22 und die Nut 21. Bei der werksseitigen Komplettierung des Schlauchanschlusses 1 wird der Sicherungsring 27 so über die Zungen 13, 14 und Tragteile 15, 16 geschoben, daß die Druckteile 32 mittels der Aufschubschräge 34 über die Wulste 20 der Tragteile 15, 16 gelangen. Dabei werden die Sicherungsnokken 36 in den Trennschlitzen 17 geführt und gelangen durch die Einführöffnungen 22 in die Nuten 21. Schlägt die Stirnseite des Sicherungsrings 27 gegen die Stirnfläche 23 des Bundes 4, gelangen die Wulste 20 in die Ausnehmungen 31 und hintergreifen somit die Druckteile 32. Der Sicherungsring ist damit axial unverschiebbar an der Aufnahmehülse 7 gelagert. In dieser Position befinden sich der Sicherungsring 27 und die Zungen 13, 14 mit den Rippen 19 in der Freigabestellung, so daß der Wellschlauch in die Aufnahmehülse 7 eingeführt werden kann. Nach dem Einstecken des Wellschlauches wird der Sicherungsring 27 um etwa 90° gedreht, so daß die Sicherungsnocken 36 in den Nuten 21 bis zum Endanschlag 25 gelangen und in die Aussparung 26 einrasten, so daß der Sicherungsring 27 gegen ein unbeabsichtigtes Zurückdrehen in die Freigabestellung gesichert ist. Während des Drehens des Sicherungringes 27 in die vorbeschriebene Befestigungsstellung gleiten . die Druckteile 32 mittels der Auflaufschräge 35 über die schräg nach außen ragenden Zungen 13, 14,und zwar quer zu deren Längsrichtung. Dabei werden die federnden Zungen 13, 14 von den Druckteilen 32 radial nach innen verlagert, so daß die nach innen vorstehenden Rippen 19 der Zungen 13, 14 in die Umfangsrille des Wellschlauches eingreifen, so daß dieser formschlüssig gehalten ist und aus dem Schlauchanschluß 1 nicht herausgezogen werden kann.

Ein wesentlicher Vorteil des vorzugsweise aus Kunststoff kostengünstig herzustellenden Schlauchanschlusses 1 besteht darin, daß eine äußerst einfache und ungehinderte Handhabung auch bei engen Platz- beziehungsweise Raumverhältnissen gewähr leistet ist. Bei der Festlegung und bei einem eventuellen Lösen des Wellschlauches wird der Sicherungsrings 27 ohne irgend eine axiale Verschiebung ausschließlich um die Achse 12 gedreht. Die Handhabung ist dabei äusserst einfach und leichtgängig und es wird zudem eine hohe Sicherheit gegen ein unbeabsichtigtes Lösen erreicht, da der Sicherungsring 27 bei in Längsrichtung wirkenden Schub- beziehungsweise Zugkräften nicht gelöst werden kann und die Zungen 13, 14 dadurch nicht in die Freigabestellung gelangen können.

## Ansprüche

1. Schlauchanschluß (1) mit einem an einem Körper befestigbaren Anschlußstück (2) und einer Aufnahmehülse (7) für einen in diese einsteckbaren Wellschlauch, der über mindestens eine in eine Umfangsrille lösbar eingreifende Rippe (19) befestigbar ist, die an mindestens einer an der Aufnahmehülse (7) vorgesehenen, in radialer Richtung federnd ausgebildeten Zunge (13, 14) angeordnet ist, die von einem Sicherungsring (27) übergriffen ist, der für die Montage und Demontage des Wellschlauches zum radialen Verschwenken der Zunge (13, 14) wahlweise in eine Freigabestellung oder eine Befestigungsstellung verlagerbar ist, dadurch gekennzeichnet, daß an der Innenseite des Sicherungsringes (27) ein Druckteil (32) angeordnet ist, der in Umfangsrichtung zum Auflaufen auf die Zunge (13, 14) ausgebildet ist und der Sicherungsring (27) um seine Längsachse (12) in die Befestigungsstellung drehbar ist.

2. Schlauchanschluß nach Anspruch 1, dadurch gekennzeichnet, daß an der Aufnahmehülse (7) neben der Zunge (13, 14) ein Tragteil (15, 16) vorgesehen ist und vorzugsweise zwischen der Zunge (13, 14) und dem Tragteil (15, 16) ein Trennschlitz (17) ausgebildet ist.

3. Schlauchanschluß nach Anspruch 1 oder 2, dadurch gekennzeichnet, daß der Druckteil (32) am Sicherungsring (27) angeformt ist und daß der Tragteil (15, 16) vorzugsweise einen den Druckteil (32) hintergreifenden Wulst (20) aufweist.

4. Schlauchanschluß nach einem der Ansprüche 1 bis 3, dadurch gekennzeichnet, daß die Aufnahmehülse (7) mindestens zwei Zungen (13, 14) und zwei Tragteile (15, 16) aufweist, die einander abwechselnd kreisringförmig angeordnet sind, und daß in der Freigabestellung die Zunge (13, 14) schräg nach außen verläuft, wobei vorzugsweise in der Freigabestellung die inneren Radien der insbesondere einander gegenüberliegenden Zungenrippen (13, 14) und der Tragteile (15,16) im wesentlichen gleich sind.

5. Schlauchanschluß nach einem der Ansprüche 2 bis 4, dadurch gekennzeichnet, daß der äußere Radius des Tragteilwulstes (20) und der innere Radius des Sicherungsringes (27) ungefähr gleich sind.

6. Schlauchanschluß nach einem der Ansprüche 1 bis 5, dadurch gekennzeichnet, daß der Wulst (20) des Tragteils (15, 16) in eine bevorzugt winkelförmige Ausnehmung (31) des Sicherungsringes (27) eingreift und daß der Sicherungsring (27) zwischen dem Tragteilwulst (20) und einem Bund (4) des Anschlußstücks (2) axial unverschiebbar aber drehbar gelagert ist.

7. Schlauchanschluß nach einem der Ansprüche 1 bis 6, dadurch gekennzeichnet, daß am Umfang der Aufnahmehülse (7) mindestens eine Nut (21) ausgebildet ist, in der ein am Sicherungsring (27) angeformter Nocken (36) geführt ist, wobei die Nut (21) vorzugsweise eine an den Trennschlitz (17) angrenzende Öffnung (22) zum Einführen des Sicherungsnockens (36), eine seitliche Führungsschräge (24) und einen Endanschlag (25) aufweist, wobei die Nut (21) insbesondere eine Aussparung (26) zur Einrastung des Sicherungsnockens (36) in der Befestigungsstellung aufweist.

8. Schlauchanschluß nach einem der Ansprüche 1 bis 7, dadurch gekennzeichnet, daß der Druckteil (32) des Sicherungsringes (27) eine bevorzugt rechteckförmige Druckfläche (33) aufweist, deren Breite in Drehrichtung des Sicherungsrings (27) etwa gleich der Breite der Zunge (13, 14) ist.

9. Schlauchanschluß nach einem der Ansprüche 1 bis 8, dadurch gekennzeichnet, daß der Druckteil (32) eine Aufschubschräge (34) für den Wulst (20) des Tragteils (15, 16) und in Drehrichtung des Sicherungsrings (27) mindestens eine Auflaufschräge (35) für die Zunge (13, 14) besitzt.

10. Schlauchanschluß nach einem der Ansprüche 1 bis 9, dadurch gekennzeichnet, daß der Sicherungsring (27) mindestens zwei bevorzugt gegenüberliegende Druckteile (32) besitzt und daß der Drehwinkel des Sicherungsringes (27) zwischen der Einführöffnung (22) und dem Endanschlag (35) der Nut (21) vorzugsweise etwa 90 Grad beträgt.

A-l 87 801/hlu
23.01.1989

FIG.1

FIG.2

A-1 87 801/hlu
23.01.1989

FIG.3

FIG.4

A-1 87 801/hlu
23.01.1989

FIG.5

FIG.6

FIG.7

FIG.8

_A-1 87 801/hlu
23.01.1989

FIG.9

FIG.10

A-1 87 801/hlu
23.01.1989

FIG.11

FIG.12

A-1 87 801/hlu
23.01.1989

FIG.13

FIG.14

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | **EINSCHLÄGIGE DOKUMENTE** | | EP 89101229.6 |
| Y | EP - A2 - 0 245 233 (DIETZEL) <br> * Gesamt * | 1,3,4 | F 16 L 33/26 <br> F 16 L 37/12 |
| A | * Gesamt * <br> -- | 7 | H 02 G 3/06 |
| Y | DE - A1 - 3 513 188 (WOCO) <br> * Gesamt * <br> -- | 1,3,4 | |
| A | EP - A1 - 0 154 926 (REHAU PLASTIKS AG) <br> * Gesamt * <br> -- | 1,2 | |
| A | CH - A5 - 645 448 (PMA, ELEKTRO AG) <br> * Gesamt * <br> -- | 1 | |
| A | EP - A1 - 0 086 900 (AGRO AG) <br> * Gesamt * <br> ---- | 1 | **RECHERCHIERTE SACHGEBIETE (Int. Cl.4)** <br><br> F 16 L 33/00 <br> F 16 L 37/00 <br> H 02 G 3/00 |

Der vorliegende Recherchenbericht wurde für alle Patentansprüche erstellt.

| Recherchenort | Abschlußdatum der Recherche | Prüfer |
|---|---|---|
| WIEN | 02-05-1989 | SCHUGANICH |